(19) Europäisches Patentamt / European Patent Office / Office européen des brevets

(11) **EP 4 079 044 B1**

(12) **FASCICULE DE BREVET EUROPEEN**

(45) Date de publication et mention de la délivrance du brevet:
**29.01.2025  Bulletin 2025/05**

(21) Numéro de dépôt: **20821322.3**

(22) Date de dépôt: **16.12.2020**

(51) Classification Internationale des Brevets (IPC):
*H04W 40/20* (2009.01)    *H04W 28/16* (2009.01)
*H04W 40/24* (2009.01)    *H04W 72/04* (2023.01)
*H04W 84/18* (2009.01)

(52) Classification Coopérative des Brevets (CPC):
**H04W 40/246; H04W 40/20; H04W 40/244;**
H04W 84/18

(86) Numéro de dépôt international:
**PCT/EP2020/086524**

(87) Numéro de publication internationale:
**WO 2021/122818 (24.06.2021 Gazette 2021/25)**

(54) **PROCÉDÉ ET DISPOSITIF DE ROUTAGE ET DE GÉNÉRATION D'UNE TABLE DE ROUTAGE**

VERFAHREN UND VORRICHTUNG ZUR LEITWEGLENKUNG UND ZUR ERZEUGUNG EINER LEITWEGLENKUNGSTABELLE

METHOD AND DEVICE FOR ROUTING AND FOR GENERATING A ROUTING TABLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **20.12.2019  FR 1915274**

(43) Date de publication de la demande:
**26.10.2022  Bulletin 2022/43**

(73) Titulaire: **Safran Electronics & Defense**
**75015 Paris (FR)**

(72) Inventeur: **CHIODINI, Alain**
**75015 PARIS (FR)**

(74) Mandataire: **Cabinet Le Guen Maillet**
**3, impasse de la Vigie**
**CS 71840**
**35418 Saint-Malo Cedex (FR)**

(56) Documents cités:
**EP-A1- 2 811 796    EP-A1- 2 887 722**

**Description**

DOMAINE TECHNIQUE

La présente invention concerne un procédé et un dispositif de génération d'une table de routage de données dans un réseau Ad-Hoc de véhicules (Ad-Hoc Network ou VANET ou MANET en anglais), pour fournir des communications au sein d'un groupe de véhicules à portée les uns des autres et entre les véhicules et les équipements fixes à portée, usuellement appelés équipements de la route.

Un VANET peut être utilisé pour soutenir le développement des Systèmes de Transport Intelligent STI (Intelligent Transportation Systems ITS en anglais).

De nombreuses applications sont proposées pour les VANET telles que l'alerte précoce et la prévention des accidents, les meilleurs itinéraires vers la destination, la réduction de la congestion, la prévention des embouteillages, l'accès Internet, les véhicules autonomes et les applications peer-to-peer. La conception et la mise en œuvre de protocoles, d'applications et de systèmes pour les VANET nécessitent de considérer ces caractéristiques distinctives, en particulier la grande mobilité des véhicules, le changement rapide de la topologie et le chemin prévu pour le transfert de messages. En outre, ce type de réseau de communication doit également tenir compte de plusieurs facteurs, tels que l'exigence de qualité, en particulier pour la transmission de messages d'alerte.

Les réseaux VANET sont destinés à assurer l'échange de messages entre véhicules évoluant à proximité des uns des autres et également entre les véhicules et des stations fixes, appelées aussi équipements de bord de route, situées à proximité immédiate. Chaque véhicule ou station fixe est équipé de moyens de communication radio et constitue un nœud du réseau.

Les véhicules sont équipés d'une variété de capteurs et échangent constamment de simples alertes et/ou des messages contenant des informations telles que leur position, leur vitesse, l'état du véhicule et/ou de son conducteur, qui permettent aux conducteurs ou aux véhicules, lorsqu'ils sont autonomes, de réagir rapidement à des situations anormales et potentiellement dangereuses comme la survenue d'un accident, des embouteillages ou la présence de conditions météorologiques adverses.

Le routage des données est une opération ayant pour but de transmettre des données d'un nœud source à un nœud destinataire par l'intermédiaire de nœuds intermédiaires de la manière la plus efficace possible, notamment en termes de temps de latence et de bande passante consommée.

L'élaboration de tables de routage pour le relayage et le routage de données doit être ainsi adapté en permanence et de manière optimale pour garantir que les données puissent être échangées en permanence.

ETAT DE LA TECHNIQUE ANTERIEURE

La demande de brevet EP2887722 divulgue un terminal configuré pour fonctionner dans un environnement d'espace blanc de télévision.

La demande de brevet EP2811796 divulgue un procédé de gestion de communication dans un réseau maillé sans fil comprenant une pluralité de nœuds sans fil.

Les techniques utilisées dans les réseaux VANET ne permettent pas une telle adaptation en permanence.

EXPOSE DE L'INVENTION

Un objet de la présente invention est de proposer un procédé et un dispositif de génération d'une table de routage de données dans un réseau Ad-Hoc qui s'adapte en permanence et de manière optimale pour garantir que les données puissent être échangées entre des nœuds.

À cet effet, il est proposé un procédé de génération d'une table de routage de données dans un réseau de communication entre des dispositifs mobiles compris dans des véhicules, le réseau de communication comportant un dispositif gestionnaire gérant une zone géographique dans laquelle les dispositifs mobiles évoluent, caractérisé en ce que la zone est partitionnée en mailles, à chaque maille est associé un ensemble de gazouillis, l'ensemble de chaque maille étant différent des ensembles de gazouillis associés aux mailles ayant une frontière commune avec la maille, la zone géographique est associée à un plan temps-fréquences et en ce que le procédé comporte les étapes exécutées par le dispositif gestionnaire de :

- réception de chaque dispositif mobile d'un paquet de signalisation identifiant le dispositif mobile et permettant une localisation du dispositif mobile,
- détermination de la maille dans laquelle se trouve chaque dispositif mobile et allocation d'un gazouillis à chaque dispositif mobile en fonction de la maille identifiée,
- réception de chaque dispositif mobile du gazouillis alloué,

- détermination à partir des gazouillis reçus, de la table de routage décrivant les possibilités de routage au sein du réseau de communication et diffusion de la table de routage aux dispositifs mobiles.

L'invention concerne aussi un dispositif de génération d'une table de routage de données dans un réseau de communication entre des dispositifs mobiles compris dans des véhicules, le réseau de communication comportant un dispositif gestionnaire gérant une zone géographique dans laquelle les dispositifs mobiles évoluent, caractérisé en ce que la zone est partitionnée en mailles, à chaque maille est associé un ensemble de gazouillis, l'ensemble de chaque maille étant différent des ensembles de gazouillis associés aux mailles ayant une frontière commune avec la maille, la zone géographique est associée à un plan temps-fréquences et le dispositif de génération de la table est compris dans le dispositif gestionnaire et comporte :

- des moyens de réception de chaque dispositif mobile d'un paquet de signalisation identifiant le dispositif mobile et permettant une localisation du dispositif mobile,
- des moyens de détermination de la maille dans laquelle se trouve chaque dispositif mobile et allocation d'un gazouillis à chaque dispositif mobile en fonction de la maille identifiée,
- des moyens de réception de chaque dispositif mobile du gazouillis alloué,
- des moyens de détermination à partir des gazouillis reçus, de la table de routage décrivant les possibilités de routage au sein du réseau de communication et diffusion de la table de routage aux dispositifs mobiles.

Ainsi, il est possible de construire des tables de routage à partir de signaux de signalisation simplifiés émis par les dispositifs du réseau Ad-Hoc. Le traitement de ces signaux, la construction des tables de routage à partir de ceux-ci et leur diffusion à destination de l'ensemble des dispositifs mobiles du réseau est effectuée par le dispositif gestionnaire. Il en résulte une meilleure exploitation de la ressource spectrale et, corrélativement, une diminution significative du niveau d'interférence généré à l'échelle du réseau ad-Hoc.

Selon un mode particulier, le dispositif gestionnaire est une borne fixe ou un dispositif mobile à l'arrêt ou circulant à faible vitesse.

Ainsi, les dispositifs mobiles n'ont plus à construire de tables de routage, la construction de ces dernières étant effectuée par le dispositif gestionnaire. Pour les dispositifs mobiles, il en résulte un gain significatif en terme de traitements effectués et d'énergie consommée induisant une disponibilité accrue de la plateforme de traitement se traduisant in fine par une célérité de diffusion des messages relayés accrue.

Selon un mode particulier, la table de routage identifie chaque liaison entre un couple de dispositifs mobiles à travers laquelle la transmission de données du premier vers le second dispositif mobile du couple est possible et/ou la transmission de données second vers le premier dispositif mobile est possible.

Ainsi, la réception de la table de routage par les dispositifs mobiles leur donne la connaissance immédiate des possibilités d'établissement de lien radio direct entre dispositifs mobiles situés à un bond du dispositif mobile émetteur et ce dernier. La propagation des messages à caractère urgent (par exemple, dans le cadre de réseaux véhiculaires, les alertes survenant lors d'une collision imminente) s'en trouve facilitée. Selon un mode particulier, la table de routage identifie des triplets de dispositifs mobiles qui permettent le transfert de données du premier dispositif mobile vers un troisième dispositif mobile via le second dispositif mobile.

Ainsi, la réception de la table de routage par les dispositifs mobiles leur donne la connaissance immédiate des possibilités de relayage à deux bonds. Comme précédemment, la propagation des messages à caractère urgent (par exemple, dans le cadre de véhicules, les alertes survenant lors d'une collision imminente) s'en trouve facilitée.

Selon un mode particulier, chaque gazouillis est un signal modulé en fréquence autour d'une fréquence centrale. Ainsi, la simplicité des gazouillis ainsi construits, le barycentre appartenant au continuum de points les définissant dans l'espace temps-fréquences, facilite leur traitement subséquent lors de leur réception par le dispositif gestionnaire.

Selon un mode particulier, chaque gazouillis émis par un dispositif mobile comporte des informations identifiant des dispositifs mobiles qui émettent des gazouillis reçus par le dispositif mobile et la table de routage est déterminée à partir des informations identifiant des dispositifs mobiles qui émettent des gazouillis reçus par le dispositif mobile.

Ainsi, le recensement des possibilités de relayage à deux bonds lors de la construction de la table de routage s'en trouve facilité.

Selon un mode particulier, la table de routage est déterminée à partir de l'environnement radioélectrique du couple de dispositifs mobiles de chaque liaison. Ainsi, le recensement des possibilités d'établissement de lien radio (direct ou relayé) lors de la construction de la table de routage s'en trouve facilité.

BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

[Fig. 1] est un exemple d'un tronçon de voie dans lequel des véhicules communiquent par l'intermédiaire d'un réseau Ad-Hoc ;

[Fig. 2] est une représentation biunivoque entre la zone géographique gérée par le dispositif gestionnaire et un gazouillis reçu par le dispositif gestionnaire pour déterminer la position d'un dispositif mobile ;

[Fig. 3] est un exemple d'un pavé radioélectrique utilisé par le dispositif gestionnaire de paquets dans la zone géographique gérée par le dispositif gestionnaire ;

[Fig. 4a] représente un ensemble de gazouillis alloué pour les mailles auquel est associé le nombre 0 ;

[Fig. 4b] représente un ensemble de gazouillis alloué pour les mailles auquel est associé le nombre 1 ;

[Fig. 4c] représente un ensemble de gazouillis alloué pour les mailles auquel est associé le nombre 2 ;

[Fig. 4d] représente un ensemble de gazouillis alloué pour les mailles auquel est associé le nombre 3 ;

[Fig. 5] représente un exemple d'architecture d'un dispositif mobile selon la présente invention ;

[Fig. 6] représente un exemple d'architecture d'un dispositif gestionnaire selon la présente invention ;

[Fig. 7] représente un exemple d'algorithme exécuté par un dispositif mobile selon la présente invention ;

[Fig. 8] représente un exemple d'algorithme exécuté par un dispositif gestionnaire selon la présente invention ;

[Fig. 9] représente un exemple d'algorithme exécuté par un dispositif gestionnaire selon la présente invention.

## EXPOSE DETAILLE DE MODES DE REALISATION

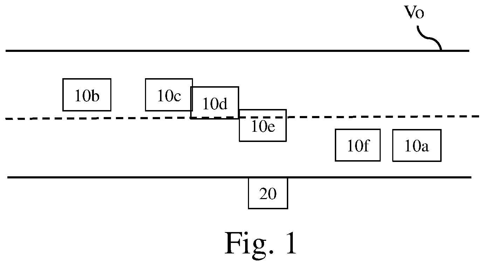

La Fig. 1 est un exemple d'un tronçon de voie dans lequel des véhicules 10 communiquent par l'intermédiaire d'un réseau Ad-Hoc dans une voie Vo dans laquelle un dispositif gestionnaire 20 et des dispositifs mobiles tels que des véhicules 10a à 10f communiquent par l'intermédiaire du réseau Ad-Hoc.

Le dispositif gestionnaire 20 est en charge de l'élaboration et de la diffusion de tables de routage vers les véhicules 10a à 10f.

Dans la Fig. 1, seul un tronçon de voie est représenté par souci de simplification mais en réalité le dispositif gestionnaire 20 gère l'ensemble des communications dans une zone géographique donnée.

Le dispositif gestionnaire 20 est par exemple un nœud fixe, tel qu'un équipement en bord de route ou, à défaut, un nœud mobile à l'arrêt ou à faible vitesse situé près d'une intersection de voies et disposant de moyens de calculs de capacité similaire à celui d'un nœud fixe.

Le dispositif gestionnaire 20 collecte des paquets de signalisation émis par les dispositifs mobiles, détermine, pour chaque dispositif mobile ayant émis le paquet, la position géographique du dispositif mobile en fonction du paquet, élabore, à partir des positions déterminées, une table de routage décrivant les possibilités de routage au sein du réseau constitué par les dispositifs mobiles et diffuse périodiquement au moins une partie de la table de routage élaborée.

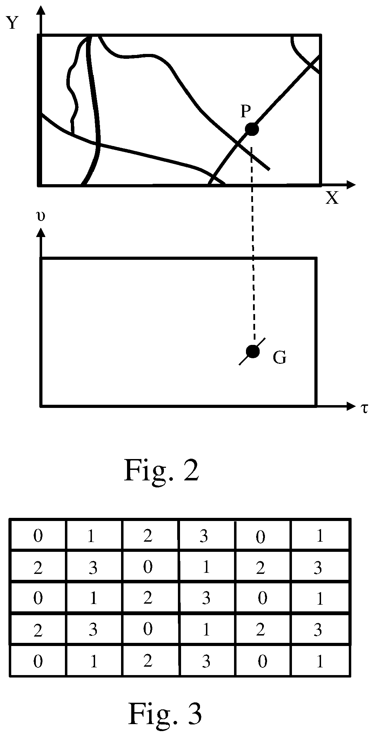

Selon la présente invention, les dispositifs ou nœuds mobiles 10 génèrent périodiquement des signaux ne transportant pas d'information binaire. Ces signaux, appelés par la suite gazouillis, comportent intrinsèquement une information relative à leur position dans la zone géographique gérée par le dispositif gestionnaire 20 voire d'un autre dispositif gestionnaire voisin du dispositif gestionnaire. Le dispositif gestionnaire effectue une correspondance biunivoque $f$ entre la zone géographique gérée par le dispositif gestionnaire et le gazouillis. Ainsi la position géographique $(X_n, Y_n)$ d'un nœud mobile 10 d'indice n est obtenue en déterminant, dans un pavé radioélectrique, le centre de gravité $(\tau_n, \upsilon_n)$ du gazouillis détecté $((X_n, Y_n) = f(\tau_n, \upsilon_n))$ comme cela sera décrit en référence à la Fig. 2.

Afin de permettre l'émission simultanée de nombreux gazouillis, la zone géographique gérée par le dispositif gestionnaire 20 est subdivisée en un pavé radioélectrique qui sera décrit en référence à la Fig. 3.

La Fig. 2 est une représentation biunivoque entre la zone géographique gérée par le dispositif gestionnaire et un gazouillis reçu par le dispositif gestionnaire pour déterminer la position d'un dispositif mobile.

Une cartographie de la zone géographique gérée par des dispositifs gestionnaires est représentée en Fig. 2. Elle représente un ensemble de routes. La zone géographique est un plan dont l'axe des abscisses X et l'axe des ordonnées Y définissent les positions dans la zone géographique.

Un pavé radio électrique est associé à la zone géographique gérée par le dispositif gestionnaire 20. Le pavé électrique est un plan dont l'axe des abscisses $\tau$ et l'axe des ordonnées $\upsilon$ définissent un intervalle de temps et une fréquence sur lesquels est défini un gazouillis qui est par exemple sous la forme d'une exponentielle complexe.

Pour simplifier la correspondance biunivoque par le dispositif gestionnaire, le pavé radioélectrique est divisé en mailles dans la zone géographique. Le pavé radio électrique partitionne la zone géographique en une pluralité de mailles comme cela est représenté en Fig. 3.

La Fig. 3 est un exemple d'un pavé radioélectrique utilisé par le dispositif gestionnaire de paquets dans la zone géographique gérée par le dispositif gestionnaire.

Afin de permettre l'émission simultanée de nombreux gazouillis dans la zone géographique gérée par le dispositif gestionnaire, de minimiser le niveau d'interférence mutuelle généré lors de collisions de signaux et de simplifier les opérations de traitement du signal nécessaire à l'identification et la localisation des dispositifs mobiles, l'espace géographique est partitionné en une pluralité de mailles, par exemple de forme de parallélogrammes. À chaque maille est attribué un entier compris entre 0 et 3 de telle sorte qu'à deux mailles adjacentes soient toujours associés deux entiers différents.

Chaque entier est associé à un ensemble de N gazouillis différents et non nécessairement mutuellement orthogonaux. Les gazouillis formant un jeu donné partagent des caractéristiques communes comme par exemple une fréquence instantanée qui croit linéairement dans le temps, une excursion en fréquence commune.

Ainsi, est attribué à chaque dispositif mobile dans une maille à laquelle est associé un entier donné, un gazouillis de l'ensemble de gazouillis associé à l'entier.

Pour chaque maille ayant le même entier associé, un intervalle de temps et une fréquence comme représentés en Fig. 2 sont associés.

Il est à remarquer ici que chaque maille peut être divisée en N sous mailles, où N est égal au nombre de gazouillis de l'ensemble de gazouillis associé à la maille.

À chaque sous maille est alloué un gazouillis qui est différent des autres gazouillis alloués aux autres sous mailles.

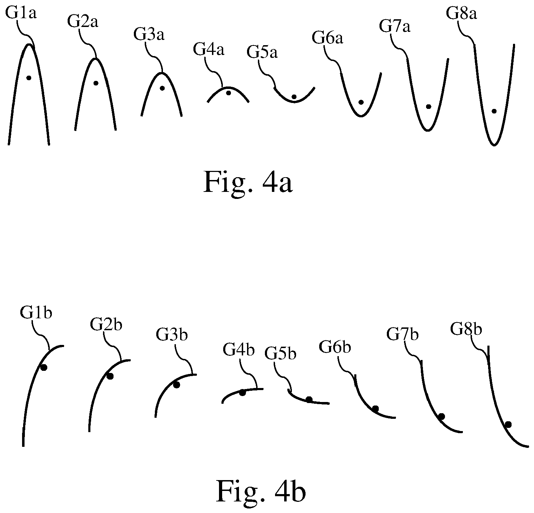

Fig. 4a représente un ensemble de gazouillis alloué pour les mailles auquel est associé le nombre 0.

Dans l'exemple de la Fig. 4a, un ensemble de huit gazouillis notés G1a à G8a est représenté.

À chaque gazouillis est associé un point représentatif de son centre de gravité. Le centre de gravité du gazouillis sert à indiquer la position géographique du dispositif mobile 10. Il matérialise la correspondance biunivoque entre un point de l'espace-temps-fréquences, par exemple le barycentre du continuum de points temps-fréquence définissant le gazouillis et le point géographique associés à la position du dispositif mobile. Le centre de gravité peut faire partie du continuum de points définissant la forme du gazouillis (c'est par exemple le cas lorsque la forme du gazouillis est linéaire). Il est nécessaire de définir un point focal relativement au gazouillis indiquant la position du véhicule une fois le gazouillis détecté par corrélation avec une réplique locale dudit gazouillis.

Chaque gazouillis a une excursion en fréquence $\Delta f$ donnée qui peut varier selon les gazouillis de l'ensemble et une excursion temporelle $\Delta t$ constante pour tous les gazouillis de l'ensemble.

Fig. 4b représente un ensemble de gazouillis alloué pour les mailles auquel est associé le nombre 1.

Dans l'exemple de la Fig. 4b, un ensemble de huit gazouillis notés G1b à G8b est représenté.

À chaque gazouillis est associé un point représentatif de son centre de gravité. Chaque gazouillis a une excursion en fréquence $\Delta f$ donnée qui peut varier selon les gazouillis de l'ensemble et une excursion temporelle $\Delta t$ constante pour tous les gazouillis de l'ensemble.

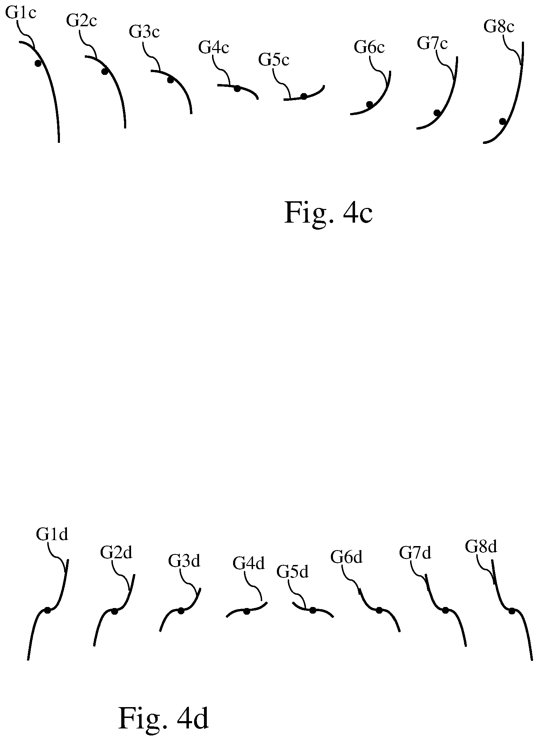

Fig. 4c représente un ensemble de gazouillis alloué pour les mailles auquel est associé le nombre 2.

Dans l'exemple de la Fig. 4c, un ensemble de huit gazouillis notés G1c à G8c est représenté.

À chaque gazouillis est associé un point représentatif de son centre de gravité.

Chaque gazouillis a une excursion en fréquence $\Delta f$ donnée qui peut varier selon les gazouillis de l'ensemble et une excursion temporelle $\Delta t$ constante pour tous les gazouillis de l'ensemble.

Fig. 4d représente un ensemble de gazouillis alloué pour les mailles auquel est associé le nombre 3.

Dans l'exemple de la Fig. 4d, un ensemble de huit gazouillis notés G1d à G8d est représenté.

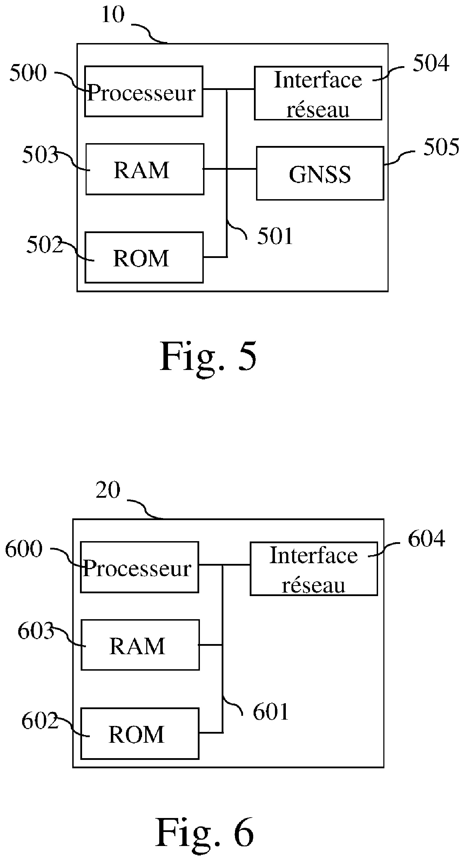

À chaque gazouillis est associé un point représentatif de son centre de gravité. Fig. 5 représente un exemple d'architecture d'un dispositif mobile selon la présente invention.

Un dispositif mobile 10 selon la présente invention comprend :

- un processeur, micro-processeur, ou microcontrôleur 500 ;
- une mémoire volatile 503 ;
- une mémoire non volatile 502 ;
- une interface réseau 504 permettant la transmission de paquets sur un lien radio ;
- un système de positionnement par satellite GNSS 505 ;
- un bus de communication 501 reliant le processeur 500 à la mémoire ROM 502, à la mémoire RAM 503 à l'interface réseau 504 et au système de positionnement par satellite GNSS 505.

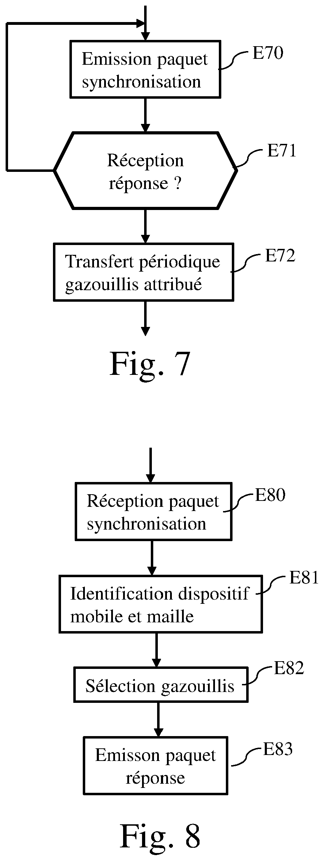

Le processeur 500 est capable d'exécuter des instructions chargées dans la mémoire volatile 503 à partir de la mémoire non volatile 502, d'une mémoire externe (non représentée), d'un support de stockage, tel qu'une carte SD ou autre, ou d'un réseau de communication. Lorsque le dispositif mobile 10 est mis sous tension, le processeur 500 est capable de lire de la mémoire volatile 503 des instructions et de les exécuter. Ces instructions forment un programme d'ordinateur qui cause la mise en œuvre, par le processeur 500, de tout ou partie du procédé décrit en relation avec la Fig. 7.

Tout ou partie du procédé décrit en relation avec la Fig. 7 peut être implémenté sous forme logicielle par exécution d'un ensemble d'instructions par une machine programmable, telle qu'un DSP (*Digital Signal Processor* en anglais ou *Unité de Traitement de Signal Numérique* en français) ou un microcontrôleur ou être implémenté sous forme matérielle par une machine ou un composant dédié, tel qu'un FPGA (*Field-Programmable Gate Array* en anglais ou *Matrice de Portes Programmable sur le Terrain* en français) ou un ASIC (*Application-Specific Integrated Circuit* en anglais ou *Circuit Intégré Spécifique à une Application* en français).

La Fig. 6 représente un exemple d'architecture d'un dispositif gestionnaire selon la présente invention.

Un dispositif gestionnaire 20 selon la présente invention comprend :

- un processeur, micro-processeur, ou microcontrôleur 600 ;
- une mémoire volatile 603 ;
- une mémoire non volatile 602 ;
- une interface réseau 604 permettant la transmission de paquets sur un lien radio ;
- éventuellement un système de positionnement par satellite GNSS non représenté en Fig. 6
- un bus de communication 601 reliant le processeur 600 à la mémoire ROM 602, à la mémoire RAM 603 et à l'interface réseau 604.

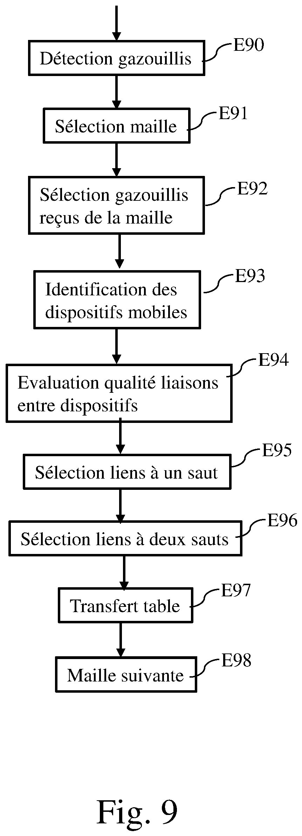

Le processeur 600 est capable d'exécuter des instructions chargées dans la mémoire volatile 603 à partir de la mémoire non volatile 602, d'une mémoire externe (non représentée), d'un support de stockage, tel qu'une carte SD ou autre, ou d'un réseau de communication. Lorsque le dispositif gestionnaire 20 est mis sous tension, le processeur 600 est capable de lire de la mémoire volatile 603 des instructions et de les exécuter. Ces instructions forment un programme d'ordinateur qui cause la mise en œuvre, par le processeur 600, de tout ou partie du procédé décrit en relation avec les Figs. 8 et 9.

Tout ou partie du procédé décrit en relation avec les Figs. 8 et 9 peut être implémenté sous forme logicielle par exécution d'un ensemble d'instructions par une machine programmable, telle qu'un DSP (*Digital Signal Processor* en anglais ou *Unité de Traitement de Signal Numérique* en français) ou un microcontrôleur ou être implémenté sous forme matérielle par une machine ou un composant dédié, tel qu'un FPGA (*Field-Programmable Gate Array* en anglais ou *Matrice de Portes Programmable sur le Terrain* en français) ou un ASIC (*Application-Specific Integrated Circuit* en anglais ou *Circuit Intégré Spécifique à une Application* en français).

La Fig. 7 représente un exemple d'algorithme exécuté par un dispositif mobile selon la présente invention.

Le présent algorithme est exécuté par chaque dispositif mobile lorsque le dispositif mobile n'est pas identifié par un dispositif gestionnaire.

À l'étape E70, le dispositif mobile commande la génération d'un message de signalisation. Le message de signalisation est transféré par l'intermédiaire de l'interface réseau 504. Le message de signalisation est par exemple constitué d'un préambule et de données. Le préambule est par exemple formé par la juxtaposition d'une sinusoïde pure et d'une séquence prédéterminée.

Les données comportent au moins un identifiant unique du dispositif mobile et les coordonnées géographiques du dispositif mobile déterminées par le système de positionnement par satellite GNSS 505. Le message de signalisation est par exemple transféré périodiquement sur un canal radio dédié à la signalisation tant que le dispositif mobile ne reçoit pas, en réponse, de message du dispositif gestionnaire.

Il est à remarquer ici, qu'en variante, le dispositif mobile 10 mémorise le pavé radio électrique et comporte une table comprenant, pour chaque sous maille du pavé radioélectrique utilisé par le dispositif gestionnaire de paquets, l'intervalle de temps et la fréquence de la maille.

À partir des informations fournies par le système de positionnement par satellite GNSS 505, le dispositif mobile 10 transfère le message de signalisation dans l'intervalle de temps et la fréquence de la sous maille dans laquelle se trouve le dispositif mobile sans utiliser le canal radio de signalisation.

Le message de signalisation est transféré de manière à faire coïncider dans l'intervalle de temps et de fréquence le point de jonction entre la sinusoïde pure et la séquence prédéterminée avec la position géographique du dispositif mobile 10 de manière à acquérir les synchronisations fréquentielle et temporelle et à indiquer la position initiale du dispositif mobile.

À l'étape E71, le dispositif mobile 10 vérifie, par l'intermédiaire de l'interface réseau 504, si un message est reçu en réponse au message de signalisation. Dans l'affirmative, le dispositif mobile passe à l'étape E72. Dans la négative, le dispositif mobile retourne à l'étape E70.

À l'étape E72, le dispositif mobile lit dans le message reçu, des informations identifiant un gazouillis par l'ensemble des gazouillis associés à la maille dans laquelle il se trouve. Par exemple, les informations identifiant le gazouillis sont le numéro associé à la maille et l'identifiant du gazouillis dans l'ensemble des gazouillis associés à la maille. Le gazouillis est alors transmis périodiquement par le dispositif mobile 10, par exemple toutes les 50 ms.

Un gazouillis (en anglais chirp) est un signal modulé en fréquence autour d'une fréquence centrale.

Le couple (temps central, fréquence centrale) est le « centre de gravité » ou le barycentre du continuum de points définissant le gazouillis d'intérêt. Ce continuum de points est compris dans l'espace de dimensions $\Delta t \times \Delta f$, et son centre

de gravité coïncide exactement avec la position géographique du dispositif mobile dans la maille selon la loi de correspondance biunivoque mentionnée plus haut dans le texte.

En bande de base, un gazouillis est décrit génériquement par la formule suivante :

$$G(t) = A(t)e^{i\phi(t)}$$

Avec :

$A(t)$ : amplitude du gazouillis
$\Phi(t)$ : phase du gazouillis
$A(t) \geq 0$ est une amplitude dont l'oscillation est lente par rapport aux oscillations de la phase $\Phi(t)$.

Plus précisément, une oscillation lente est définie par :

$|\dot{a}(t)/a(t)| \ll |\dot{\Phi}(t)|$ où $\dot{x}$ est la dérivée de $x$, l'amplitude est quasi constante à l'échelle d'une pseudo-période $T(t) = 2\pi/|\dot{\Phi}(t)|$,
$|\ddot{\Phi}(t)|/\dot{\Phi}^2(t) \ll 1$, la pseudo-période $T(t)$ étant lentement variable d'oscillation à oscillation et où $\ddot{x}$ est la dérivée seconde de $x$.

Dans la mise en œuvre de l'invention, l'amplitude des gazouillis utilisés est constante : $A(t) = C$ où $C$ désigne une constante réelle positive.

Les gazouillis d'un même ensemble ne sont a priori pas mutuellement orthogonaux. La propriété d'orthogonalité n'est pas une exigence même si elle peut être avantageuse dans certains cas (la discrimination de gazouillis localisés dans la même portion de l'espace temps-fréquences peut s'en trouver facilitée). Les gazouillis générés peuvent être rendus deux à deux orthogonaux au moyen du processus d'orthogonalisation de Gram-Schmidt.

L'ensemble de gazouillis tel que représenté en Fig. 4a comporte N gazouillis

*Gna* indicés par $n$ (entier) $\in [1; N]$
Chaque gazouillis est défini sur l'intervalle temporel $[T_{LOWER}; T_{UPPER}]$
La durée des gazouillis est dont identique et est égale à $\Delta t = T_{UPPER} - T_{LOWER}$
L'excursion en fréquence maximale des gazouillis (gazouillis 1 et N) est égale à $\Delta f = F_{UPPER} - F_{LOWER}$
La fréquence instantanée d'un gazouillis $n$ de cette famille est donnée par : $f_n(t) =$

$$2\frac{n-1}{N-1}F_{MEAN} + \left(1 - 2\frac{n-1}{N-1}\right)(at^2 + bt + c)$$

Avec :

$$F_{MEAN} = \frac{F_{LOWER} + F_{UPPER}}{2}$$

$$a = -4\frac{\Delta f}{\Delta t^2}$$

$$b = -4\frac{\Delta f}{\Delta t^2}(T_{LOWER} + T_{UPPER}) = 2aT_{MEAN}$$

$$c = F_{LOWER} + 4\frac{\Delta f}{\Delta t^2}(T_{LOWER})^2 - 4\frac{\Delta f}{\Delta t^2}(T_{LOWER} + T_{UPPER})T_{LOWER}$$

$$c = F_{LOWER} - a(T_{LOWER})^2 + 2aT_{MEAN}T_{LOWER}$$

Où :

$$T_{MEAN} = \frac{T_{LOWER} + T_{UPPER}}{2}$$

La phase de ce gazouillis est donnée par :

$$\Phi_n(t) = 2\pi \int\limits_{T_{LOWER}}^{t} f_n(u)\, du + \varphi$$

Où $\varphi$ est une constante d'intégration dont la valeur peut être par exemple choisie de manière à ce que $\Phi(T_{LOWER})$ = 0 radian (dans ce cas, $\varphi$ = 0 radian).

L'ensemble de gazouillis tel que représenté en Fig. 4b comporte N gazouillis

*Gnb* indicés par *n* (entier) $\in$ [1; N]

Chaque gazouillis est défini sur l'intervalle temporel [$T_{LOWER}$;$T_{UPPER}$]

La durée des gazouillis est dont identique et est égale à $\Delta t = T_{UPPER} - T_{LOWER}$

L'excursion en fréquence maximale des gazouillis (gazouillis 1 et N) est égale à $\Delta f = F_{UPPER} - F_{LOWER}$

La fréquence instantanée d'un gazouillis *n* de cette famille est donnée par :

$$f_n(t) = 2\frac{n-1}{N-1}F_{MEAN} + \left(1 - 2\frac{n-1}{N-1}\right)\left(F_{LOWER} + \Delta f \sqrt{1 - \left(\frac{t - T_{UPPER}}{\Delta t}\right)^2}\right)$$

Avec :

$$F_{MEAN} = \frac{F_{LOWER} + F_{UPPER}}{2}$$

La phase de ce gazouillis est donnée par :

$$\Phi_n(t) = 2\pi \int\limits_{T_{LOWER}}^{t} f_n(u)\, du + \varphi$$

Où $\varphi$ est une constante d'intégration dont la valeur peut être par exemple choisie de manière à ce que $\Phi(T_{LOWER})$ = 0 radian (dans ce cas, $\varphi$ = 0 radian).

L'ensemble de gazouillis tel que représenté en Fig. 4c comporte N gazouillis

*Gnc* indicés par *n* (entier) $\in$ [1; N]

Chaque gazouillis est défini sur l'intervalle temporel [$T_{LOWER}$;$T_{UPPER}$]

La durée des gazouillis est dont identique et est égale à $\Delta t = T_{UPPER} - T_{LOWER}$

L'excursion en fréquence maximale des gazouillis (gazouillis 1 et N) est égale à $\Delta f = F_{UPPER} - F_{LOWER}$

La fréquence instantanée d'un gazouillis *n* de cette famille est donnée par :

$$f_n(t) = 2\frac{n-1}{N-1}F_{MEAN} + \left(1 - 2\frac{n-1}{N-1}\right)\left(F_{LOWER} + \Delta f \sqrt{1 - \left(\frac{t - T_{LOWER}}{\Delta t}\right)^2}\right)$$

Avec :

$$F_{MEAN} = \frac{F_{LOWER} + F_{UPPER}}{2}$$

La phase de ce gazouillis est donnée par :

$$\Phi_n(t) = 2\pi \int_{T_{LOWER}}^{t} f_n(u)\, du + \varphi$$

Où $\varphi$ est une constante d'intégration dont la valeur peut être par exemple choisie de manière à ce que $\Phi(T_{LOWER})$ = 0 radian (dans ce cas, $\varphi$ = 0 radian).

L'ensemble de gazouillis tel que représenté en Fig. 4d comporte N gazouillis

*Gnd* indicés par *n* (entier) $\in$ [1; N]

Chaque gazouillis est défini sur l'intervalle temporel [$T_{LOWER}$;$T_{UPPER}$]

La durée des gazouillis est dont identique et est égale à $\Delta t$ = $T_{UPPER}$ - $T_{LOWER}$

L'excursion en fréquence maximale des gazouillis (gazouillis 1 et N) est égale à $\Delta f$ = $F_{UPPER}$ - $F_{LOWER}$

La fréquence instantanée d'un gazouillis *n* de cette famille est donnée par :

$$f_n(t) = 2\frac{n-1}{N-1}F_{MEAN} + \left(1 - 2\frac{n-1}{N-1}\right)\left(F_{LOWER} + \Delta f\left(\frac{1}{2} + 4\left(\frac{t - T_{MEAN}}{\Delta t}\right)^3\right)\right)$$

Avec :

$$F_{MEAN} = \frac{F_{LOWER} + F_{UPPER}}{2}$$

$$T_{MEAN} = \frac{T_{LOWER} + T_{UPPER}}{2}$$

La phase de ce gazouillis est donnée par :

$$\Phi_n(t) = 2\pi \int_{T_{LOWER}}^{t} f_n(u)\, du + \varphi$$

Où $\varphi$ est une constante d'intégration dont la valeur peut être par exemple choisie de manière à ce que $\Phi(T_{LOWER})$ = 0 radian (dans ce cas, $\varphi$ = 0 radian).

Dans un mode particulier de réalisation, une information représentative du voisinage du dispositif mobile 10 est ajoutée. Par exemple cette information est insérée en creux et comporte les gazouillis émis par les dispositifs mobiles voisins qui sont reçus par le dispositif mobile 10.

Le terme « creux » se réfère au fait que l'information est révélée par le calcul d'un produit scalaire entre le signal d'intérêt reçu et les répliques locales des signaux recherchés. En effet, le gazouillis est modifié de manière à le rendre orthogonal à un ou plusieurs signaux particuliers représentant un ou plusieurs éléments d'information. L'orthogonalité est idéalement révélée par un produit scalaire nul ou quasi-nul (en présence d'un rapport signal sur bruit élevé). Lorsqu'elle est manifestée, l'orthogonalité révèle une information. Sur le plan mathématique, pour insérer une information en creux, le gazouillis est projeté sur le sous-espace vectoriel orthogonal au sous-espace engendré par le ou les signaux que l'on souhaite insérer en creux dans le signal gazouillis.

La Fig. 8 représente un exemple d'algorithme exécuté par un dispositif gestionnaire selon la présente invention.

Le présent algorithme est exécuté périodiquement par le dispositif gestionnaire, par exemple toutes les 50 ms.

À l'étape E80, le dispositif gestionnaire détecte la réception d'un message de signalisation par l'interface réseau 604.

Le message de signalisation est par exemple constitué d'un préambule et de données. Le préambule est par exemple formé par la juxtaposition d'une sinusoïde pure et d'une séquence prédéterminée.

Les données comportent au moins un identifiant unique du dispositif mobile ayant émis le message et les coordonnées géographiques du dispositif mobile.

À l'étape suivante E81, le dispositif gestionnaire 20 identifie le dispositif mobile ayant émis le message ainsi que la maille ou la sous maille dans laquelle le dispositif mobile se trouve.

L'identification de la sous maille est par exemple effectuée à partir des coordonnées géographiques du dispositif mobile.

À l'étape suivante E82, le dispositif gestionnaire 20 sélectionne, parmi l'ensemble des gazouillis associés à la maille dans laquelle se trouve le dispositif mobile, un gazouillis qui n'a pas été alloué à un autre dispositif mobile. Par exemple, le dispositif gestionnaire 20 sélectionne le gazouillis associé à la sous maille dans laquelle se trouve le dispositif mobile 10.

À l'étape suivante E83, le dispositif gestionnaire 20 commande le transfert d'un message comportant l'identifiant du dispositif mobile auquel est destiné le message ainsi que des informations identifiant le gazouillis sélectionné. Par exemple, les informations identifiant le gazouillis sont le numéro associé à la maille et l'identifiant du gazouillis dans l'ensemble des gazouillis associés à la maille.

La Fig. 9 représente un exemple d'algorithme exécuté par un dispositif gestionnaire selon la présente invention.

Le présent algorithme est exécuté périodiquement, par exemple toutes les 50 ms.

À l'étape E90, le dispositif gestionnaire 20 détecte la réception d'une pluralité de gazouillis pendant une fenêtre temporelle par exemple égale à 50 ms.

La détection des gazouillis est par exemple effectuée à l'aide d'un ensemble de corrélateurs.

À l'étape suivante E91, le dispositif gestionnaire 20 sélectionne une maille.

À l'étape suivante E92, le dispositif gestionnaire 20 sélectionne, parmi les gazouillis reçus, les gazouillis qui correspondent à ceux associés à la maille ainsi que les gazouillis qui correspondent aux gazouillis des sous mailles voisines de la maille sélectionnée.

À l'étape suivante E93, le dispositif gestionnaire 20 identifie les dispositifs mobiles auxquels ont été alloués les gazouillis reçus. En effet, le dispositif gestionnaire sait comment le découpage en sous mailles a été effectué et à quelles sous mailles les gazouillis ont été attribués.

À l'étape E94, le dispositif gestionnaire 20 évalue la qualité de la communication radio entre les différents dispositifs mobiles identifiés.

Le dispositif gestionnaire 20 évalue la possibilité d'existence d'une liaison radio entre chaque couple possible de dispositifs mobiles 10.

Par exemple, l'évaluation est par exemple effectuée à partir d'un indicateur de qualité décrivant l'environnement radioélectrique du couple de dispositifs mobiles considéré. L'environnement est basé sur le type de terrain (urbain, suburbain, rural) dans lequel se trouvent les dispositifs mobiles 10.

Par exemple, l'évaluation est effectuée à partir d'informations identifiant des dispositifs mobiles qui émettent des gazouillis reçus par le dispositif mobile. Les informations sont par exemple des gazouillis incorporés en creux dans les gazouillis émis par les dispositifs mobiles.

Les gazouillis incorporés en creux sont détectés en effectuant un produit scalaire entre le gazouillis émis par le dispositif mobile et les gazouillis susceptibles d'être émis par les dispositifs mobiles environnants et en comparant le résultat du produit scalaire à un seuil.

À l'étape suivante E95, le dispositif gestionnaire 20 sélectionne chaque liaison radio entre un couple de dispositifs mobiles qui a un indice de qualité supérieur à un seuil prédéterminé. Chacune des liaisons sélectionnées est mémorisée dans une première partie d'une table. Chaque ligne de la première partie de la table comporte l'identifiant de chaque dispositif mobile du couple de dispositifs mobiles et un état de la liaison. L'état de la liaison est représentatif de la possibilité de transmission de données du premier vers le second dispositif mobile du couple et/ou de la possibilité de transmission de données du second vers le premier dispositif mobile.

À l'étape suivante E96, le dispositif gestionnaire 20 forme, à partie de la première partie de la table, des triplets de dispositifs mobiles qui permettent le transfert de données d'un premier dispositif mobile vers un troisième dispositif mobile via un second dispositif mobile. Chaque triplet est mémorisé dans une seconde partie de la table. Chaque ligne de la seconde partie de la table comporte l'identifiant de chaque dispositif mobile du triplet.

À l'étape suivante E97, le dispositif gestionnaire commande la diffusion de la table formée par l'intermédiaire de l'interface réseau 604.

Cette opération effectuée, le dispositif mobile sélectionne à l'étape E98 une autre maille si besoin et retourne à l'étape E91.

**Revendications**

1. Procédé de génération d'une table de routage de données dans un réseau de communication entre des dispositifs mobiles compris dans des véhicules, le réseau de communication comportant un dispositif gestionnaire gérant une zone géographique dans laquelle les dispositifs mobiles évoluent, **caractérisé en ce que** la zone est partitionnée en mailles, à chaque maille est associé un ensemble de gazouillis, chaque gazouillis est un signal modulé en fréquence autour d'une fréquence centrale, l'ensemble de gazouillis associé à chaque maille étant différent des ensembles de gazouillis associés aux mailles ayant une frontière commune avec la maille, la zone géographique est associée à un plan temps-fréquences et **en ce que** le procédé comporte les étapes exécutées par le dispositif gestionnaire de :

   - réception de chaque dispositif mobile d'un paquet de signalisation identifiant le dispositif mobile et permettant une localisation du dispositif mobile,
   - détermination de la maille dans laquelle se trouve chaque dispositif mobile et allocation d'un gazouillis à chaque dispositif mobile en fonction de la maille identifiée,
   - réception (E90) de chaque dispositif mobile du gazouillis alloué,
   - détermination (E95, E96) à partir des gazouillis reçus, de la table de routage décrivant les possibilités de routage au sein du réseau de communication et diffusion (E97) de la table de routage aux dispositifs mobiles.

2. Procédé selon la revendication 1, **caractérisé en ce que** le dispositif gestionnaire est une borne fixe ou un dispositif mobile à l'arrêt ou circulant à faible vitesse.

3. Procédé selon la revendication 1 ou 2, **caractérisé en ce que** la table de routage identifie chaque liaison entre un couple de dispositifs mobiles à travers laquelle la transmission de données du premier vers le second dispositif mobile du couple est possible et/ou la transmission de données du second vers le premier dispositif mobile est possible.

4. Procédé selon la revendication 3, **caractérisé en ce que** la table de routage identifie des triplets de dispositifs mobiles qui permettent le transfert de données du premier dispositif mobile vers un troisième dispositif mobile via le second dispositif mobile.

5. Procédé selon l'une quelconque des revendications 1 à 4, **caractérisé en ce que** chaque gazouillis émis par un dispositif mobile comporte des informations identifiant des dispositifs mobiles qui émettent des gazouillis reçus par le dispositif mobile et **en ce que** la table de routage est déterminée à partir des informations identifiant des dispositifs mobiles qui émettent des gazouillis reçus par le dispositif mobile.

6. Procédé selon l'une quelconque des revendications 3 à 5, **caractérisé en ce que** la table de routage est déterminée à partir de l'environnement radioélectrique du couple de dispositifs mobiles de chaque liaison.

7. Dispositif de génération d'une table de routage de données dans un réseau de communication entre des dispositifs mobiles compris dans des véhicules, le réseau de communication comportant un dispositif gestionnaire gérant une zone géographique dans laquelle les dispositifs mobiles évoluent, **caractérisé en ce que** la zone est partitionnée en mailles, à chaque maille est associé un ensemble de gazouillis, chaque gazouillis est un signal modulé en fréquence autour d'une fréquence centrale, l'ensemble de gazouillis associé à chaque maille étant différent des ensembles de gazouillis associés aux mailles ayant une frontière commune avec la maille, la zone géographique est associée à un plan temps-fréquences et **en ce que** le dispositif de génération de la table est compris dans le dispositif gestionnaire et comporte :

   - des moyens de réception de chaque dispositif mobile d'un paquet de signalisation identifiant le dispositif mobile et permettant une localisation du dispositif mobile,
   - des moyens de détermination de la maille dans laquelle se trouve chaque dispositif mobile et allocation d'un gazouillis à chaque dispositif mobile en fonction de la maille identifiée,
   - des moyens de réception de chaque dispositif mobile du gazouillis alloué,
   - des moyens de détermination à partir des gazouillis reçus, de la table de routage décrivant les possibilités de routage au sein du réseau de communication et diffusion de la table de routage aux dispositifs mobiles.

**Patentansprüche**

1. Verfahren zur Erzeugung einer Routing-Tabelle von Daten in einem Kommunikationsnetz zwischen in Fahrzeugen enthaltenen mobilen Vorrichtungen, wobei das Kommunikationsnetz eine Verwaltungsvorrichtung aufweist, die ein geographisches Gebiet verwaltet, in dem die mobilen Vorrichtungen sich bewegen, **dadurch gekennzeichnet, dass** das Gebiet in Maschen aufgeteilt ist, jeder Masche eine Einheit von Chirps zugeordnet ist, jeder Chirp ein um eine zentrale Frequenz frequenzmoduliertes Signal ist, wobei die jeder Masche zugeordnete Einheit von Chirps sich von den Einheiten von Chirps unterscheidet, die den Maschen zugeordnet sind, die eine gemeinsame Grenze mit der Masche haben, das geographische Gebiet einer Zeit-Frequenz-Ebene zugeordnet ist, und dass das Verfahren die von der Verwaltungsvorrichtung ausgeführten Schritte aufweist:

- Empfang eines Signalisierungspakets von jeder mobilen Vorrichtung, das die mobile Vorrichtung identifiziert und eine Lokalisierung der mobilen Vorrichtung erlaubt,
- Bestimmung der Masche, in der sich jede mobile Vorrichtung befindet, und Zuweisung eines Chirps zu jeder mobilen Vorrichtung abhängig von der identifizierten Masche,
- Empfang (E90) des zugewiesenen Chirps von jeder mobilen Vorrichtung,
- Bestimmung (E95, E96), ausgehend von den empfangenen Chirps, der Routing-Tabelle, die die Routingmöglichkeiten innerhalb des Kommunikationsnetzes beschreibt, und Verbreitung (E97) der Routing-Tabelle an die mobilen Vorrichtungen.

2.  Verfahren nach Anspruch 1, **dadurch gekennzeichnet, dass** die Verwaltungsvorrichtung ein ortsfester Anschluss oder eine stillstehende oder sich mit geringer Geschwindigkeit bewegende mobile Vorrichtung ist.

3.  Verfahren nach Anspruch 1 oder 2, **dadurch gekennzeichnet, dass** die Routing-Tabelle jede Verbindung zwischen einem Paar von mobilen Vorrichtungen identifiziert, über die die Übertragung von Daten von der ersten zur zweiten mobilen Vorrichtung des Paars möglich ist und/oder die Übertragung von Daten von der zweiten zur ersten mobilen Vorrichtung möglich ist.

4.  Verfahren nach Anspruch 3, **dadurch gekennzeichnet, dass** die Routing-Tabelle Triplets von mobilen Vorrichtungen identifiziert, die die Übertragung von Daten von der ersten mobilen Vorrichtung zu einer dritten mobilen Vorrichtung über die zweite mobile Vorrichtung erlauben.

5.  Verfahren nach einem der Ansprüche 1 bis 4, **dadurch gekennzeichnet, dass** jeder von einer mobilen Vorrichtung gesendete Chirp Informationen aufweist, die mobile Vorrichtungen identifizieren, die von der mobilen Vorrichtung empfangene Chirps senden, und dass die Routing-Tabelle ausgehend von den Informationen bestimmt wird, die mobile Vorrichtungen identifizieren, die von der mobilen Vorrichtung empfangene Chirps senden.

6.  Verfahren nach einem der Ansprüche 3 bis 5, **dadurch gekennzeichnet, dass** die Routing-Tabelle ausgehend von der Funkumgebung des Paars von mobilen Vorrichtungen jeder Verbindung bestimmt wird.

7.  Vorrichtung zur Erzeugung einer Routing-Tabelle von Daten in einem Kommunikationsnetz zwischen in Fahrzeugen enthaltenen mobilen Vorrichtungen, wobei das Kommunikationsnetz eine Verwaltungsvorrichtung aufweist, die ein geographisches Gebiet verwaltet, in dem die mobilen Vorrichtungen sich bewegen, **dadurch gekennzeichnet, dass** das Gebiet in Maschen aufgeteilt ist, jeder Maschine eine Einheit von Chirps zugeordnet ist, jeder Chirp ein um eine zentrale Frequenz frequenzmoduliertes Signal ist, wobei die jeder Masche zugeordnete Einheit von Chirps sich von den Einheiten von Chirps unterscheidet, die den Maschen zugeordnet sind, die eine gemeinsame Grenze mit der Masche haben, das geographische Gebiet einer Zeit-Frequenz-Ebene zugeordnet ist, und dass die Vorrichtung zur Erzeugung der Tabelle in der Verwaltungsvorrichtung enthalten ist und aufweist:

- Einrichtungen zum Empfang eines Signalisierungspakets von jeder mobilen Vorrichtung, das die mobile Vorrichtung identifiziert und eine Lokalisierung der mobilen Vorrichtung erlaubt,
- Einrichtungen zur Bestimmung der Masche, in der sich jede mobile Vorrichtung befindet, und Zuweisung eines Chirps zu jeder mobilen Vorrichtung abhängig von der identifizierten Masche,
- Einrichtungen zum Empfang des zugewiesenen Chirps von jeder mobilen Vorrichtung,
- Einrichtungen zur Bestimmung, ausgehend von den empfangenen Chirps, der Routing-Tabelle, die die Routingmöglichkeiten innerhalb des Kommunikationsnetzes beschreibt, und Verbreitung der Routing-Tabelle an die mobilen Vorrichtungen.

**Claims**

1. Method for generating a data routing table in a communication network between mobile devices contained in vehicles, the communication network comprising a manager device that manages a geographical area in which the mobile devices move, **characterized in that** the area is partitioned into grids, a set of chirps is associated with each grid, each chirp is a frequency-modulated signal around a centre frequency, the set of chirps associated with each grid being different from the sets of chirps associated with grids having a common border with the grid, the geographical area is associated with a time/frequency plane and **in that** the method comprises the following steps, executed by the manager device:

    - receiving, from each mobile device, a signalling packet identifying the mobile device and enabling the mobile device to be located,
    - determining the grid in which each mobile device is located and allocating a chirp to each mobile device on the basis of the identified grid,
    - receiving (E90) the allocated chirp from each mobile device,
    - determining (E95, E96), based on the received chirps, the routing table describing the routing options within the communication network, and broadcasting (E97) the routing table to the mobile devices.

2. Method according to Claim 1, **characterized in that** the manager device is a fixed terminal or a mobile device that is stationary or travelling at low speed.

3. Method according to Claim 1 or 2, **characterized in that** the routing table identifies each link between a pair of mobile devices via which it is possible to transmit data from the first to the second mobile device of the pair and/or it is possible to transmit data from the second to the first mobile device.

4. Method according to Claim 3, **characterized in that** the routing table identifies triplets of mobile devices that enable data to be transferred from the first mobile device to a third mobile device via the second mobile device.

5. Method according to any one of Claims 1 to 4, **characterized in that** each chirp transmitted by a mobile device contains information identifying mobile devices that transmit chirps received by the mobile device, and **in that** the routing table is determined based on the information identifying mobile devices that transmit chirps received by the mobile device.

6. Method according to any one of Claims 3 to 5, **characterized in that** the routing table is determined based on the radio environment of the pair of mobile devices of each link.

7. Device for generating a data routing table in a communication network between mobile devices contained in vehicles, the communication network comprising a manager device that manages a geographical area in which the mobile devices move, **characterized in that** the area is partitioned into grids, a set of chirps is associated with each grid, each chirp is a frequency-modulated signal around a centre frequency, the set of chirps associated with each grid being different from the sets of chirps associated with grids having a common border with the grid, the geographical area is associated with a time/frequency plane and **in that** the device for generating the table is contained in the manager device and comprises:

    - means for receiving, from each mobile device, a signalling packet identifying the mobile device and enabling the mobile device to be located,
    - means for determining the grid in which each mobile device is located and allocating a chirp to each mobile device on the basis of the identified grid,
    - means for receiving the allocated chirp from each mobile device,
    - means for determining, based on the received chirps, the routing table describing the routing options within the communication network, and broadcasting the routing table to the mobile devices.

Vo

10b   10c   10d
              10e
                    10f   10a

20

Fig. 1

Fig. 2

| 0 | 1 | 2 | 3 | 0 | 1 |
|---|---|---|---|---|---|
| 2 | 3 | 0 | 1 | 2 | 3 |
| 0 | 1 | 2 | 3 | 0 | 1 |
| 2 | 3 | 0 | 1 | 2 | 3 |
| 0 | 1 | 2 | 3 | 0 | 1 |

Fig. 3

G1a  G2a  G3a  G4a  G5a  G6a  G7a  G8a

## Fig. 4a

G1b  G2b  G3b  G4b  G5b  G6b  G7b  G8b

## Fig. 4b

G1c  G2c  G3c  G4c  G5c  G6c  G7c  G8c

## Fig. 4c

G1d  G2d  G3d  G4d  G5d  G6d  G7d  G8d

## Fig. 4d

10

500

Processeur

503

RAM

502

ROM

501

504

Interface
réseau

505

GNSS

# Fig. 5

20

600

Processeur

603

RAM

602

ROM

601

604

Interface
réseau

# Fig. 6

Emission paquet synchronisation — E70

Réception réponse ? — E71

Transfert périodique gazouillis attribué — E72

## Fig. 7

Réception paquet synchronisation — E80

Identification dispositif mobile et maille — E81

Sélection gazouillis — E82

Emisson paquet réponse — E83

## Fig. 8

Détection gazouillis ⌐E90

Sélection maille ⌐E91

Sélection gazouillis
reçus de la maille ⌐E92

Identification des
dispositifs mobiles ⌐E93

Evaluation qualité liaisons
entre dispositifs ⌐E94

Sélection liens à un saut ⌐E95

Sélection liens à deux sauts ⌐E96

Transfert table ⌐E97

Maille suivante ⌐E98

Fig. 9

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2887722 A
- EP 2811796 A